# EUROPEAN PATENT APPLICATION

(11) **EP 4 523 874 A1**
(43) Date of publication of application: **19.03.2025**
(21) Application number: 24200220.2
(22) Date of filing: 13.09.2024
(51) Int. Cl.: B29B 9/00, B29B 17/00, B29B 17/04, B29C 43/14, B29C 43/26, B29C 43/52, B29C 51/02, B29C 51/32, C08J 11/06, B29C 43/00, B29C 51/00, B29C 51/08, B29C 51/26, B29C 51/42, B29B 11/12, B29K 105/00, B29K 105/26, B29K 23/00, B29C 43/40

(54) **PROCESS FOR THE REUSE OF MOLDING WASTE OF PLASTIC MATERIAL, IN PARTICULAR EVA AND PRODUCT OBTAINED WITH SAID PROCESS**

(30) Priority: 15.09.2023 IT 202300019011
(71) Applicant: Gruppo Meccaniche Luciani S.r.l., 62014 Corridonia (MC) (IT)
(72) Inventor: Benedetti, Samuele, 63844 Grattazzolina ( FM ) (IT); Pagliari, Augusto, 62014 Corridonia (MC) (IT)
(74) Representative: Karaghiosoff, Giorgio Alessandro

(57) **Abstract**

Process for recycling plastic material composed of EVA, which process provides the following steps:
i) grinding EVA waste to reduce it into granules or pellets having a pre-established grain size or a distribution of different grain sizes within a pre-established range of grain sizes between a pre-established maximum value and a pre-established minimum value;
ii) compression or thermoforming at a first controlled temperature of the mass of granules or pellets;
iii) compression or thermoforming at a second controlled temperature of the mass obtained from step ii), wherein the said second controlled temperature is a lower temperature than the said first controlled temperature, with the said first temperature being in the range from 170 to 220°C, preferably around 190°C, and the said second temperature being in the range from 12 to 60°C, preferably around 40°C.

The invention also relates to an intermediate product and/or a finished product manufactured according to said process.

## Description

### Technical field of the invention

The invention relates to a process for the recovery of waste material from the manufacturing processes of products made of plastic material, in particular EVA (Ethylene Vinyl Acetate).

E.V.A., acronym for Ethylene Vinyl Acetate, is a copolymeric plastic material of ethylene and vinyl acetate, widely used in many industrial sectors for the production of various products, highly appreciated for its properties but inherently non-recyclable.

Currently, therefore, waste from the production processes of EVA products cannot be reused and is destined to be collected in landfills.

Alternatively and non-exhaustively, some EVA recycling processes are currently known that operate according to two different techniques:
- A first recycling technique is the so-called mechanical recycling and consists of shredding, washing, and granulating EVA waste to obtain new granules that can be reused in the production of new objects. A key condition for successfully completing the recycling process is the selection of the material to be recycled in order to use material as uncontaminated or undegraded as possible to maintain the original properties of EVA in the objects made with the recycled waste. The limitations due to contamination and thermal degradation, therefore, affect both the quality of the final product obtained from EVA waste and the significant costs of selecting said waste to eliminate the contaminated or degraded material from the mass to be recycled to such an extent as to compromise the quality of the products made from the recycled material.
- A second technique is classified as chemical recycling and consists of subjecting EVA waste to chemical processes that break the molecular chains and transform the structure to recover the monomers or co-monomers that constitute EVA, thereby obtaining new raw materials that can be used to synthesize new polymers. Some examples of chemical recycling are pyrolysis, where gas and/or liquids and/or solids are derived from EVA waste and can be used both as fuels and as raw materials for chemical processes; hydrogenation, where EVA waste is treated with hydrogen at high pressure and temperature (between 200 and 400°C) to remove oxygen present in the molecules and obtain saturated hydrocarbons to be used as fuels or as raw materials for the production of new polymers; glycolysis, where EVA waste is reacted with glycols to obtain poly-glycols that can be used as plasticizers or as intermediates for the synthesis of new polymers.

The known EVA recycling processes, some examples of which were described above, have the drawback of requiring severe operating conditions and high costs, which is why they are not widely applied. Furthermore, chemical recycling processes additionally provide the disadvantage of generating undesirable by-products or harmful emissions for the environment.

Document FR2690645 describes a process for manufacturing polymer-based materials using EVA, where a crosslinked EVA powder with peroxide is subjected to hot compression. The pressure, temperature, and duration of the compression are chosen based on the desired density. The described process specifically refers to the valorization of industrial waste containing peroxide-crosslinked EVA, especially waste from the footwear industry. The EVA-based powder used for the described process has a grain size of less than 2mm, believing that the cohesion between polymer chains of the material obtained by hot compression is greater the smaller the grain size. Furthermore, the recycled EVA-based material comprises at least 30% EVA to ensure that the number of free polymer chains is sufficient to ensure the cohesion of the overall material mass. In particular, the EVA-based material from the recycling of footwear industry waste comprises from 40% to 60% by weight of peroxide-crosslinked EVA, from 25% to 40% mineral fillers essentially consisting of calcium carbonate and silicates, and the remaining part comprises SBR (styrenebutadiene rubber) or EPDM (ethylene propylene diene monomer) polymers. In an embodiment, the aforementioned mixture includes 10 to 12% by weight of SBR or EPDM, some percentage points of polyethylene glycol (PEG), and oils from 3 to 5% by weight of a vulcanizing agent consisting of 1,3-ditert-butyl-peroxyisopropyl-benzene (Peroximon F40) and activators and accelerators.

As an exemplary value of the grain size of the EVA-based powder, a median grain size value of 500 microns is indicated.

The manufacturing process provides a single step of hot compression for a monolayer sheet or panel made with said EVA-based material with the aforementioned composition and grain size. For the manufacture of a multilayer sheet or panel, it provides a succession of compression steps for each layer added to the previous ones. The process provides the realization of a first layer through a first hot compression step, the deposition of a powder material layer on said first layer, and the subjection of said combination of the first layer and the added powder material layer to further compression. The process can thus provide the repetition of the deposition and compression step for each further powder layer added to a panel consisting of a combination of a certain number of underlying and superimposed layers produced through a corresponding number of previous repetitions of the powder layer addition and compression step with the combination of previously produced layers. A preferred embodiment describes a panel composed of three superimposed layers. The two outer layers are produced independently of the intermediate layer, each through a single hot compression step of a corresponding EVA-based powder layer, while the intermediate layer is also produced from an EVA-based powder layer deposited between the already produced outer layers, an additional hot compression step being performed on the combination of said already produced outer layers and the intermediate EVA-based powder layer. The temperatures to be provided in the hot compression phase are chosen in the range between 70°C and 150°C.

Document US2006/0249867 describes a process for recycling EVA-based waste composed of EVA-based formed products. The process provides the steps of preparing the formed EVA-based waste, heating this formed waste, rolling the heated EVA-based waste, and extracting strips of semi-finished product. The heating temperatures are set within a range from 80°C to 200°C, preferably from 80°C to 120°C, and are such as to achieve the softening of said formed waste. These softened formed waste materials are fed into a rolling device to undergo repeated rolling in such a way as to integrate them together and obtain a semi-finished product in the form of flat pieces that can serve as a support layer for carpets, suitcases, or other products to which one or more further layers or finishing films are applied.

An embodiment provides that the formed waste is sectioned into pieces in the form of small blocks or pellets before being subjected to the further steps of the process.

Document US 6017970 describes a process for recycling discarded articles that provides the selection of said articles into thermoset material articles, thermoplastic material articles, and rubber articles. The shredding of said articles is carried out to respectively obtain granules of thermoset material, granules of thermoplastic material, and granules of rubber. The feeding of said granules, with a pre-established quantitative ratio between the granules of said materials, is carried out into a mold. The simultaneous compression and heating of said mixture of granules of different materials is performed at a temperature such that the fusion of the thermoplastic material granules is achieved, followed by the rapid cooling of the mold in such a way as to consolidate the shape of the material imposed by the mold.

The composition of the mixture of thermoset material granules, thermoplastic material granules, and rubber as described have a ratio of thermoplastic material granules to rubber granules and thermoset fiber fragments of 5:3:2. The size of the granules is expected to be greater than 3mm and can reach up to 10mm. The mold heating temperature is between 160°C and 220°C during the compression, while the rapid cooling brings the mold temperature to a value between 10°C and 15°C, and the cooling time from the heating temperature to the cooling temperature is between 1 and 5 minutes.

The process of heating the mixture to the melting temperature of the thermoplastic material granules allows for generating a polymer matrix that encapsulates within itself the rubber granules and thermoset material granules or fibers, while the rapid and sudden cooling below the melting temperature of the materials in said mixture makes it possible to achieve the desired shape imposed by the mold while preventing at least partial fusion of other material components different from the thermoplastics from causing adhesion of the material to the mold surface, which would be difficult to remove.

Furthermore, the document defines the abrupt cooling as essential for the successful outcome of the described process, as it is functional to the encapsulation of unfused fiber fragments and thermoset plastic granules within the mass of material.

The present invention has the scope of creating a process for recycling scrap materials and products made of EVA without requiring high costs or complex processes, and in some cases also potentially environmentally unfriendly processes, while still enabling the recycling of the material and the production of products from this recycled material, thereby increasing the possibility of making a process feasible in a simple and economical way that leads to a circular economy regarding EVA.

### Summary of the invention

The present invention provides the aforementioned purpose with a recycling process that involves the following steps:
i) grinding the EVA waste for reduction into granules or pellets having a pre-established grain size or a distribution of different grain sizes within a pre-established range of grain sizes between a pre-established maximum value and a pre-established minimum value;
ii) compression or thermoforming at a first controlled temperature of the mass of granules or pellets;
iii) compression or thermoforming at a second controlled temperature of the mass obtained from step ii), wherein the said second controlled temperature is a lower temperature than the said first controlled temperature, with the said first temperature being in the range from 170 to 220°C, preferably around 190°C, and the said second temperature being in the range from 12 to 60°C, preferably around 40°C.

Regarding the grain size of the material to be subjected to pressing or thermoforming, in one embodiment, it is in the range from 2.5 mm to 8 mm, and preferably it is around 3.5 mm.

The compression or thermoforming step at said first controlled temperature, i.e., compression with simultaneous heat treatment, for example, with simultaneous heating of the mass of granules, and/or the compression or thermoforming step at said second controlled temperature can be carried out with a continuous process, such as, and not exclusively, by means of one or more pairs of rollers, each pair comprising a pressing roller and a cooperating counter-roller, or in a stepped process that provides performing one or both of said compression steps in a mold.

Non-limiting examples of production waste can include so-called sprues, molded products unsuitable for sale, i.e., those with defects, or any other type of production waste generated during the processing of EVA.

The compression or thermoforming step at said first controlled temperature, for example, hot, in continuous mode can be followed by a compression or thermoforming step at said second controlled temperature performed in a mold with compression surfaces shaped such as to give a pre-established shape to the product.

The compression or thermoforming step at said first controlled temperature, for example, hot, performed by means of a mold can be followed by a compression or thermoforming step at said second controlled temperature in continuous mode, for example, by means of at least one pair of rollers comprising a pressing roller and a counter-roller, and/or in stepped mode, with a second mold provided with which the product formed in the mold is subjected to compression for the execution of step ii) of compression or thermoforming at said first controlled temperature, for example hot temperature, of the EVA granules. The said first and second mold, respectively for the compression or thermoforming at said first controlled temperature and for the compression or thermoforming at said second controlled temperature, can also have different shapes or contours of the compression surfaces.

The thermal conditioning of the material in granular form for the compression or thermoforming at said first controlled temperature, i.e., heating to a pre-established temperature, can occur using any known thermal conditioning technique, i.e., heating and/or cooling, such as by transferring or withdrawing thermal energy directly to or from the granular material and/or also indirectly, such as by using the mold or the compression members, such as, for example, the rollers, to transfer or withdraw heat to and from the granular material, with said mold and said rollers correspondingly heated or cooled.

When the compression or thermoforming step at said first controlled temperature, for example hot temperature, is carried out by means of a mold, it is advantageous to provide a range for filling the mold with the granular material, i.e. with a pre-established quantity of EVA granules, wherein the component of said recycled EVA granules constitutes a predominant part of the total mass of material, or the total mass of material to be subjected to the pressing or thermoforming step at said first temperature is solely composed of said recycled EVA granules.

In one embodiment, the said predominant quantity of recycled EVA granules corresponds to a quantity of recycled EVA granules in the mass of material to be subjected to the pressing and/or thermoforming step at said first controlled temperature that varies from a minimum corresponding to a percentage of 80% of the total mass to a maximum of 100% of the total mass.

In one embodiment, when the component of recycled EVA granules is less than 100% of the total mass to be subjected to the pressing or thermoforming step at said first controlled temperature, the remaining part of the material is preferably composed of EVA that has not yet undergone transformation into a product and, therefore, does not result from recycling processes.

according to one embodiment, the phase of pressing or thermoforming at said first controlled temperature, for example hot temperature, and/or the phase of pressing or thermoforming at said second controlled temperature provides, in succession and/or simultaneously, a cutting step of the compressed material according to a pre-established shape.

In one embodiment, the cutting members can be composed of knives associated with the mold(s) and/or knives made by shaping the perimeter edges of the compression surfaces, which perform a combined perimeter cutting action of the artifact obtained from pressing or thermoforming the granular material.

In one embodiment, for pressing or thermoforming at said second controlled temperature, following the pressing and/or thermoforming at said first controlled temperature, in which the said first controlled temperature corresponds to a higher temperature than said second controlled temperature, an intermediate cooling step is provided, at least to an intermediate temperature between said first and said second temperature, and this cooling step is intermediate between the pressing or thermoforming step at said first controlled temperature, i.e., hot, and the subsequent pressing or thermoforming step at said second controlled temperature.

The above-mentioned cooling phase can be passive, i.e. it can include the simple exposure to the surrounding environment for a pre-established period of time and/or until the attainment of said second temperature provided for pressing and/or thermoforming step iii) . It is also possible to provide an active cooling step, i.e., carried out by means of cooling members for the artifact obtained following the hot pressing step.

The terms heating, first controlled temperature, and second controlled temperature used in the present invention generally refer to the ambient temperature, i.e. the temperature of the material in thermal equilibrium with the surrounding environment, or relatively to each other. In the case of intermediate cooling temperature, the term cooling refers to a reduction in the temperature of the material compared to the said first controlled temperature provided for the pressing or thermoforming steps ii).

The controlled working temperatures of the material in said steps ii) and iii) can be measured thanks to detection thermometers in combination with heating and/or cooling members that are controlled regarding their activation and deactivation and/or regarding thermal power by a control unit, which generates and transmits the activation and/or deactivation control signals and/or thermal power regulation based on the detected temperatures and reference values, i.e. set nominal values for the hot pressing temperature and the cold pressing temperature.

The product obtained from the process according to one or more of the previous embodiments has a pre-established shape and pre-established dimensions that are determined by the configuration of the pressing surfaces and the cutting knives, while the product consists of an agglomerate of individual granules at least partially adhering along mutual contact surfaces and/or at least partially fused together.

A particular embodiment of the products obtained from the process according to the present invention is in the form of sheets or plates of pre-established thickness, having any thickness and having any perimeter shape and any dimension.

Advantageously, the said sheets or plates are flexible and/or rollable on themselves and allow for further processing.

In particular, when a continuous process is applied, the product obtained can be in the form of a continuous flexible plate, i.e. rollable and/or a continuous flexible sheet that has the same structure of the material, i.e., at least partially adhering granules along their mutual contact surfaces and/or at least a part of the granules that are fused together for at least part of their mass.

The artifacts obtained from the present recycling process according to one or more of the variants described above can be used as an intermediate or starting product for manufacturing products suitable for certain uses and contexts, particularly, without being a limiting example, products such as mats, sanitary mats, mouse pads, footrests for sports environments, or animal mats.

The product obtained with one or more of the process variants described above can be used for the execution of subsequent processing steps to manufacture additional types of products. In fact, the said product can be subjected to sewing and/or gluing, also with other components of different materials such as plastic and non-plastic materials.

Thanks to the ability to couple multiple pieces of product obtained with the process according to one or more variants of the present invention, besides being used as an intermediate product for manufacturing the products mentioned above, the said product obtained with the said process can also be used as a raw material for manufacturing leather goods or similar, as a substitute for synthetic leather. The term leather goods refers to clothing products, footwear, both for uppers and soles, accessories for clothing, items such as bags, suitcases, and also upholstery products such as faux leather coverings for furniture such as armchairs, chairs, sofas, car seat covers, saddles for two-wheeled vehicles, and other similar products.

Concerning the use of the intermediate product obtained with the process according to the present invention, it is possible to subject said product, besides the thermoforming phase regarding its outer shape, to a three-dimensional structuring phase of the surfaces, for example, embossing or surface texturing to provide said surface with a three-dimensional structural design, possibly of a three-dimensional surface configuration that simulates the natural three-dimensional structure of leather or other natural three-dimensional structures.

Using scraps of different colors, multicolored artifacts are obtained, where the blend of colors depends on the colors of the scraps used.

Uniform-colored products, i.e. solid colors, can be obtained by selecting scraps of the same color.

From what has been described above, the extreme simplicity of the EVA waste recycling process is clearly evident. This process is also easy to implement and relatively inexpensive. Furthermore, it allows recycling EVA products until production waste is reduced to zero.

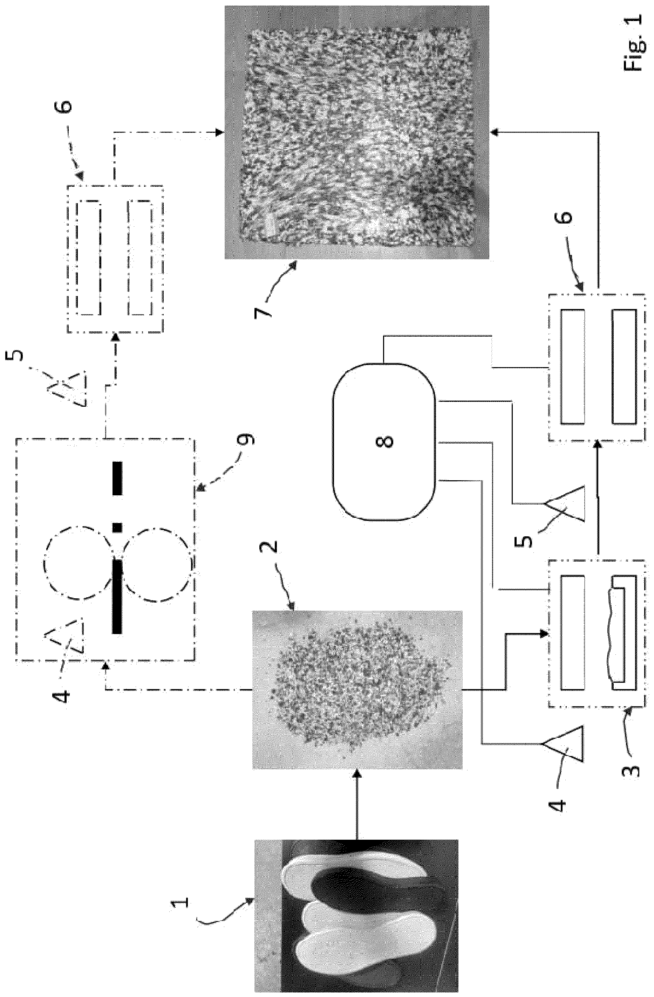

Figure 1 shows schematically an example of the process according to the present invention.

For simplicity of expression, in the following description, without limiting the more general protective scope, the compression or thermoforming step performed with a first controlled temperature of the material will be defined as hot pressing, as in most cases the mold, and therefore the material subjected to the first compression step, is heated, thereby maintaining the more general terminology used above regarding temperature definitions.

Number 1 shows the step of collecting production waste, exemplified non-limitingly by sole elements. The said waste is subjected to a grinding process whereby the material pieces are reduced to a mass of granules having a pre-established grain size or a pre-established grain size distribution within a certain range of grain sizes between a minimum value and a maximum value.

Reference number 2 shows the result of the grinding step, i.e. a mass of EVA material granules.

As previously indicated, it is possible to provide any grain size or grain size distribution. Preferably, the grain sizes are within the range from 2.5 mm to 8 mm, and preferably it is around 3.5 mm.

The lower part of Figure 1 and the upper part of Figure 1 show two possible alternatives for the subsequent steps of the process.

At step 3, represented iconically by a mold and counter-mold of a pressing mold, part of the EVA material reduced to granules in step 2 is loaded into the mold and subjected to pressing.

Reference number 4 indicates a thermal conditioning device for the granular material, which in one embodiment consists of a heater to heat said material. The heating of the EVA material reduced to granules can take place in various ways, such as, for example, by means of a heat generator that transfers thermal energy directly to the material or also by heating the parts of the mold that come into contact with the material during pressing operation. Although for simplicity, a heat generator 4 separate from the mold is shown in the figure, this representation ideally includes the variant in which the heat generator is integrated into the mold and heats the mold elements themselves.

At the end of the hot pressing step, the pressed piece is subjected to an intermediate cooling phase, which can be a passive phase, in which the cooling from the material temperature at which pressing was performed to an intermediate temperature or to the said second controlled temperature provided for the execution of the thermoforming step at the said second controlled temperature, occurs by heat transfer from the pressed product to the surrounding environment or said cooling can take place also by exposing the piece to a cooling device 5. When the piece reaches a pre-established working temperature, it is again subjected to a pressing step, i.e. a thermoforming step at the said second controlled temperature, indicated with 6. This thermoforming step 6 is carried out at the said second controlled temperature, which in a preferred embodiment is different from the said first controlled temperature of the material provided for hot pressing and, in particular, is lower than the latter.

Reference number 7 indicates a formed piece obtained from the two steps respectively of hot pressing 3 and thermoforming 6, i.e. thermoforming at the said second controlled temperature.

For illustrative simplicity, the piece obtained is constituted by a sheet or plate having a pre-established shape, a pre-established thickness, and pre-established dimensions.

From this recycled EVA piece 7, various products can be obtained, such as mats for performing different functions, or the said sheet or plate 7 can be subjected to further processing, such as coupling with other pieces through sewing, gluing, or other methods.

The operating units of the process, as in the more general combination at least the pressing molds, heat generators, and thermal conditioning devices, i.e. cooling devices, can be controlled concerning their activation and deactivation and their working times through a control unit 8. This unit is preferably in the form of a processor provided with at least one memory in which a control program is loaded, which, when executed by said processor, contains the instructions to make the processor capable of activating and deactivating said operating units to perform the process steps described above.

The figure does not detail any temperature sensors that can be provided at the two pressing molds for performing the hot pressing steps 3 and the cold pressing steps 6, and which temperature sensors detect the working temperature for hot and cold pressing and provide the measurement signal to the processor 8.

The control program includes instructions to generate activation and deactivation signals and/or to set the functional parameters of the thermal conditioning devices, i.e. heating and cooling devices 4 and 5, and the presses.

The upper part of the figure shows, with dashed lines, an alternative form of the process and the related devices for the hot pressing steps.

In this case, hot pressing is performed continuously using a pair of rollers 9, one of which is a pressing roller, and the other is a counter-roller, between which a conveyor for the granular material passes.

Similar to the previous variant, a heat generator 4 can heat the material upstream of the roller pair. Alternatively, the heat generator is associated with the rollers and heats the rollers themselves or at least one of them to perform the hot pressing step.

At the output of the roller pair of the hot pressing step 3, the pressed material can be transferred directly to a press for performing the thermoforming step at the said second controlled temperature 6, similar to what was described for the previous embodiment. The thermoforming mold at the said second controlled temperature can be fed with a continuous sheet or a continuous plate exiting the roller pair that performs the hot pressing. Alternatively, between the thermoforming mold at the said second controlled temperature and the roller pair for hot pressing, cutting devices can be provided that cut the material into shaped pieces from the sheet exiting the said roller pair.

Even in this embodiment variant, between hot pressing and the subsequent lower-temperature pressing, a cooling step for the material can be provided, which can occur in the alternative forms described with reference to the previous executive example.

The shaped cutting of the piece 7 can also be performed directly by the pressing and thermoforming molds, i.e., both by the hot pressing mold and by the thermoforming mold, or the second compression step. Alternatively, separate cutting devices can be provided to form the pieces.

Still according to another variant of the embodiment which includes a pair of hot pressing rollers, also the thermoforming, i.e. the second compression step at the said second controlled temperature, can be performed using a pair of rollers, making it possible to obtain a product in the form of a roll of sheet or continuous plate that can be stored as an intermediate product intended for subsequent processing for the manufacture of a final product.

Despite being indicated in the illustrated embodiment as a single hot pressing mold and a single thermoforming mold at the said second controlled temperature or a single pair of hot pressing rollers and/or a single pair of thermoforming rollers at the said second controlled temperature, these operating units can also be provided in two or more units that can operate in parallel, forming multiple parallel production lines for pieces of recycled EVA material according to the present invention.

## Claims

1. Process for recycling plastic material made up of EVA, which process provides the following steps:
i) grinding the EVA waste for reduction into granules or pellets having a pre-established grain size or a distribution of different grain sizes within a pre-established range of grain sizes between a pre-established maximum value and a pre-established minimum value;
ii) compression or thermoforming at a first controlled temperature of the mass of granules or pellets;
iii) compression or thermoforming at a second controlled temperature of the mass obtained from step ii), wherein the said second controlled temperature is a lower temperature than the said first controlled temperature, the said first temperature being in the range from 170 to 220°C, preferably around 190°C, and the said second temperature being in the range from 12 to 60°C, preferably around 40°C.

2. Process according to claim 1, wherein the grain size of the material to be subjected to pressing or thermoforming in one embodiment is within the range from 2.5 mm to 8 mm, and preferably is around 3.5 mm.

3. Process according to claim 1 or 2, wherein the compression or thermoforming step at the said first controlled temperature, i.e. a compression with simultaneous heat treatment of heating the mass of granules, and/or the compression or thermoforming step at the said second controlled temperature, lower than the said first temperature, are carried out with a continuous process or in a stepped process that provides performing one or both of said compression steps in a mold and on a pre-established quantity of the said EVA material in granules.

4. Process according to claim 3, wherein
the compression or thermoforming step at the said first controlled temperature, in continuous mode, can be followed by a compression or thermoforming step at the said second controlled temperature, performed in a mold that has compression surfaces shaped such as to give a pre-established shape to the product, or alternatively,
the compression or thermoforming step at the said first controlled temperature, performed by means of a mold, can be followed by a compression or thermoforming step at the said second controlled temperature in continuous mode or in stepped mode, a second mold being provided in which the product formed in the mold used for the execution of step ii) of compression or thermoforming at the said first controlled temperature of the recycled EVA granules is subjected to compression.

5. Process according to one or more of the preceding claims, wherein the thermal conditioning of the material in granular form for compression or thermoforming at the said first controlled temperature takes place by transferring or withdrawing thermal energy directly to or from the granular material and/or also indirectly, using the mold or the compression members, such as the rollers, to transfer or withdraw heat to and from the granular material, with said mold and said rollers correspondingly heated or cooled.

6. Process according to one or more of the preceding claims, wherein the compression or thermoforming step at the said first controlled temperature takes place providing a mass of granular material for filling the mold, predominantly composed of recycled EVA granules, within a range from a minimum corresponding to a percentage of recycled EVA granules of 80% of the total mass to a maximum of 100% of the total mass of the material to be fed into the forming cavity of the mold, while when this part is less than 100% of the total mass of the material, the remaining part of the granular material is composed of unprocessed EVA granules, i.e. EVA that has not undergone any transformation process and is present in quantities ranging from 0 to 20% of the total mass of the material.

7. Process according to one or more of the preceding claims, wherein the pressing or thermoforming step at the said first controlled temperature, and/or the pressing or thermoforming step at the said second controlled temperature, provides in succession and/or simultaneously a cutting step of the compressed material according to a pre-established perimeter shape.

8. Process according to claim 7, wherein cutting members are provided that can consist of knives associated with the mold(s) and/or knives made by shaping the perimeter edges of the compression or thermoforming surfaces, which perform a combined perimeter cutting action on the artifact obtained by pressing the granular material.

9. Process according to one or more of the preceding claims, wherein between step ii) of pressing or thermoforming at the first controlled temperature and step iii) of pressing or thermoforming at the said second controlled temperature, an intermediate cooling step is provided to a pre-established temperature that is identical to or different from the said second controlled temperature, said cooling step possibly consisting of:
a passive cooling step, i.e. thermal exchange between the material obtained following step ii) of pressing or thermoforming at the said first controlled temperature and the surrounding environment for a pre-established period of time and/or until the attainment of a pre-established working temperature corresponding to the said second temperature provided for the second step of pressing or thermoforming iii) at the said second controlled temperature;
an active cooling step, i.e., performed by cooling devices for the artifact obtained following step ii) of pressing or thermoforming at the said first controlled temperature.

10. Recycled EVA-based product obtained through the recycling process according to one or more of the preceding claims 1 to 9.

11. Product according to claim 10, **characterized by** being a finished product or an intermediate product, and being in the form of a sheet or plate having a pre-established thickness and/or a pre-established perimeter shape and/or pre-established dimensions in length and width.

12. Product according to claims 10 or 11, **characterized by** being a finished product or an intermediate product and consisting of a sheet or continuous plate wound or capable of being wound into a roll.

13. Product according to one or more of the preceding claims 10 to 12, **characterized by** being composed of an agglomerate of individual granules at least partially adhering to each other along mutual contact surfaces and/or at least partially fused together by at least part of the mass of said granules.
